(19) Europäisches Patentamt
European Patent Office
Office européen des brevets

(11) **EP 4 140 842 B1**

(12) **EUROPEAN PATENT SPECIFICATION**

(45) Date of publication and mention
of the grant of the patent:
**05.06.2024 Bulletin 2024/23**

(21) Application number: **21193256.1**

(22) Date of filing: **26.08.2021**

(51) International Patent Classification (IPC):
**B60W 30/095** (2012.01)     **B60W 50/023** (2012.01)

(52) Cooperative Patent Classification (CPC):
**B60W 30/095; B60W 50/023; G01S 7/4808;
G01S 13/87; G01S 17/931;** B60W 2420/40;
B60W 2420/403; B60W 2420/408; B60W 2420/54;
B60W 2420/60; G01S 13/931; G01S 2013/93185;
G01S 2013/9323

(54) **METHODS AND SYSTEMS FOR CONTROLLING A VEHICLE**

VERFAHREN UND SYSTEME ZUR STEUERUNG EINES FAHRZEUGS

PROCÉDÉ ET SYSTÈME DE COMMANDE DE VÉHICULE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**01.03.2023 Bulletin 2023/09**

(73) Proprietor: **Aptiv Technologies AG
8200 Schaffhausen (CH)**

(72) Inventors:
• **YOUSEF, Sebastian
44795 Bochum (DE)**
• **PREDIGER, Christian
51789 Lindlar (DE)**
• **ROSENTHAL, Thorsten
45468 Mülheim (DE)**
• **MEUTER, Mirko
40699 Erkrath (DE)**

(74) Representative: **Manitz Finsterwald
Patent- und Rechtsanwaltspartnerschaft mbB
Martin-Greif-Strasse 1
80336 München (DE)**

(56) References cited:
EP-A1- 3 767 325          CN-A- 112 904 370
DE-A1-102010 037 509      US-A1- 2019 243 371
US-A1- 2019 302 761

## Description

FIELD

The present invention relates to methods and systems for controlling a vehicle.

BACKGROUND

Radar data processing is an essential task for autonomous or partially autonomous vehicles.

Document US 2019/243371 A1 discloses the use of a neural network trained for detecting whether a radar based Forward Crash Warning of an autonomous vehicle provides false alarms.

Accordingly, there is a need for efficient radar data processing.

SUMMARY

The present invention provides a computer implemented method, a computer system and a non-transitory computer readable medium according to the independent claims. Embodiments are given in the subclaims, the description and the drawings.

In one aspect, the present invention is directed at a computer implemented method for controlling a vehicle, the method comprising the following steps performed (in other words: carried out) by computer hardware components: acquiring sensor data from a sensor; determining first processed data related to a first area around the vehicle based on the sensor data using a machine learning method (for example an artificial neural network); determining second processed data related to a second area around the vehicle based on the sensor data using a conventional method, wherein the second area comprises (for example: is) a subarea of the first area; and controlling the vehicle based on the first processed data and the second processed data.

In other words, a machine learning method is applied to sensor data for vehicle control for an area around a vehicle, and a conventional (in other words: classical) method is applied to the same sensor data for the vehicle control for a part of the area.

It has been found that the machine learning method may provide efficient results for a large area, while the conventional method may provide reliable and legally appropriate detections.

The conventional method may not be using machine learning.

For example, the method may provide a machine learning implementation of radar based occupancy grid vehicle safety systems, for example radar detection with machine learning supported occupancy grid.

According to an embodiment, the conventional method double checks the first processed data.

The conventional method may provide safety relevant detections, and may confirm detections of the machine learning method.

According to an embodiment, the conventional method double checks the first processed data along a target trajectory of the vehicle. Objects along the trajectory may be particularly relevant for controlling the vehicle.

According to an embodiment, double checking comprises determining an energy in radar data related to a position of an object determined based on the first processed data (using the conventional method). It has been found that objects determined by the machine learning method may be verified by determining an energy of radar detections using the conventional method.

According to an embodiment, the first processed data and the second processed data are determined in parallel. For example, the machine learning method and the conventional method may be implemented on different hardware components, so that they may be carried out concurrently.

According to an embodiment, controlling the vehicle comprises controlling braking of the vehicle (for example controlling a brake of the vehicle or a recuperation module of the vehicle).

According to an embodiment, wherein if an object detected based on first processed data is confirmed based on second processed data, controlling the vehicle comprises comfort braking of the vehicle. Comfort braking may be comfortable for the passengers of the vehicle, and comfort braking in this situation may be sufficient since the object was determined based on the machine learning method and based on the larger area already.

According to an embodiment, wherein if an object detected based on first processed data is not confirmed based on second processed data, controlling the vehicle comprises not initiating braking of the vehicle. The conventional method may provide the final determination whether an object is present or not, and if an object is not present along the trajectory of the vehicle, breaking may not be required.

According to an embodiment, if an object undetected based on first processed data is detected based on second processed data, controlling the vehicle comprises emergency braking of the vehicle. Emergency braking may be braking at a deceleration as high as possible taking into account the condition of the vehicle and the road. Emergency braking in this situation may be required since the object only was detected in the smaller area by the conventional method. According to an embodiment, the first area and/or the second area are/is determined based on a velocity of the vehicle. According to an embodiment, the first area and/or the second area are/is determined based on a steering angle of the vehicle. Depending on the velocity of the vehicle and/or the steering angle of the vehicle, different areas may be relevant for the control of the vehicle. For example, if the vehicle is driving faster, an area farther away may be relevant; for example, if the vehicle is turning to the left, and area towards the left of the vehicle may be relevant.

According to an embodiment, the sensor comprises at least one of a radar sensor, a lidar sensor, an infrared sensor, or a camera. It will be understood that although various embodiments are described herein with reference to radar data, various other kinds of sensors may be used.

In another aspect, the present invention is directed at a computer system comprising the features of claim 13. The computer system can be part of a vehicle.

The computer system may comprise a plurality of computer hardware components (for example a processor, for example processing unit or processing network, at least one memory, for example memory unit or memory network, and at least one non-transitory data storage). It will be understood that further computer hardware components may be provided and used for carrying out steps of the computer implemented method in the computer system. The non-transitory data storage and/or the memory unit may comprise a computer program for instructing the computer to perform several or all steps or aspects of the computer implemented method described herein, for example using the processing unit and the at least one memory unit.

In another aspect, the present invention is directed at a vehicle, comprising the computer system as described herein and the sensor.

In another aspect, the present invention is directed at a non-transitory computer readable medium comprising instructions for carrying out several or all steps or aspects of the computer implemented method described herein. The computer readable medium may be configured as: an optical medium, such as a compact disc (CD) or a digital versatile disk (DVD); a magnetic medium, such as a hard disk drive (HDD); a solid state drive (SSD); a read only memory (ROM), such as a flash memory; or the like. Furthermore, the computer readable medium may be configured as a data storage that is accessible via a data connection, such as an internet connection. The computer readable medium may, for example, be an online data repository or a cloud storage.

According to various embodiments, object perception with the use of both classical algorithms for AEB (autonomous emergency braking) functions and machine learning model based approaches may be provided. Various embodiments may provide a rearrangement of computation intensive M/L and model based method together with safety-critical braking algorithms, may close the gap of non existing safe and secure M/L based methods for autonomous drive, may decrease computation effort by processing only trajectory relevant radar data with classical DFT algorithm, and/ or may provide object detection, classification as well as extraction of further important information like poses and gestures which cannot be processed by classical occupancy grid methods alone.

DRAWINGS

Exemplary embodiments and functions of the present invention are described herein in conjunction with the following drawings, showing schematically:

Fig. 1    an illustration of process flow to occupancy grid;

Fig. 2    a flow diagram of data processing according to various embodiments;

Fig. 3    an illustration of a situation with a straight (in other words: linear) trajectory according to various embodiments;

Fig. 4    an illustration of a situation with a curved trajectory according to various embodiments;

Fig. 5    an illustration of data flow on ECU system level according to various embodiments;

Fig. 6    a flowchart illustration a method flow with confirmation logic according to various embodiments;

Fig. 7    an illustration of normal system behavior according to various embodiments;

Fig. 8    an illustration of false positive perception according to various embodiments;

Fig. 9    an illustration of false negative perception according to various embodiments;

Fig. 10   a flow diagram illustrating a method for controlling a vehicle according to various embodiments; and

Fig. 11   a computer system with a plurality of computer hardware components configured to carry out steps of a computer implemented method for controlling a vehicle according to various embodiments.

DETAILED DESCRIPTION

For assisted driving, automated driving, and autonomous driving, it may be desired for the vehicle to perceive its surroundings and recognize dynamic and static objects. Object detection and recognition may be done by several sensor systems of the car simultaneously. In the following, exemplary embodiments will be provided for radar sensors; however, it will be understood that other kinds of sensors (for example lidar sensors or cameras) may be used.

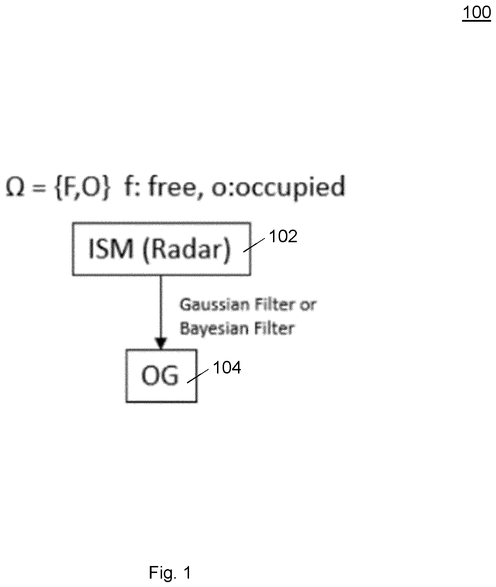

Fig. 1 shows an illustration 100 of process flow to occupancy grid. Sensor data may be acquired from radar sensors, and the sensor data may be filtered, for example by an CFAR (constant false alarm rate) method and afterwards being processed with a so called Inverse Sensor Model (ISM) 102 to compute qualitative information of the environment. A virtual 2-dimensional grid may be imagined to input probability of occupied or free areas; this grid may be referred to as occupancy map or occupancy grid (OG) 104. The ISM 102 may be represented by the conditional probability of occupancy of each cell (of the OG 104), whereas cells are independent from each other.

The sensor data (in other words: perception data) may be filtered with classical filters and methods, that may be mainly blind to certain detections of objects that are from smaller dimension or farther away. Due to the problem that radar detections may be suffering of noise factors, the fetched data streams may have to be filtered out to hand them over to classical methods. This may erase important information which could be used for more performant object detection, though.

According to various embodiments, a combination of various processing branches may be provided which allows deploying a machine learning based perception technology, which may deliver better characteristics and has superiority over classical radar processing, object detection and tracking. The target hereby may be to use the machine learning technology not only as input for comfort functionality but also for safety relevant driving decisions. Safety in this context may mean that such a system may allow to argue a safety case with respect to the state of the art required ISO26262. According to various embodiments, all this may be done without the need of following the ISO development processes and the fulfillment of hard to achieve elements like explainability for the immanent machine learning method part itself. Thereby, various embodiments may overcome the contradiction that a superior technology of machine learning (which may deliver much higher recognition quality and by this in the end may prevent many risky situations) is by design not applicable in many systems without the increased effort of software development aligned to ISO26262.

In terms of the ISO 26262, the methods according to various embodiments may match a decomposition in a QM path (which may be handled by a machine learning (M/L) method) and a ASIL B path (which may be provided by a conventional method and which may initiate comfort and emergency braking). Under the assumption that the radar data stream from the radar was also generated in ASIL B, quality the overall path for the radar (from the sensor to the objects) may achieve an ASIL B.

Various embodiments may provide methods for processing radar data with minimal efforts of safety qualification, while at the same time provide highly efficient processing and computing performance. Furthermore, the combination and synergy between classical methods (in other words: methods which are free from machine learning methods) and machine learning methods (for example artificial neural networks) may lower possible systematic failures.

Various embodiments may furthermore overcome the disadvantage of the need to filter out low energy/low threshold radar detections to be able to provide them to a classical but still safer processing method.

Various embodiments may use two independent paths of processing filled with the same radar data stream.

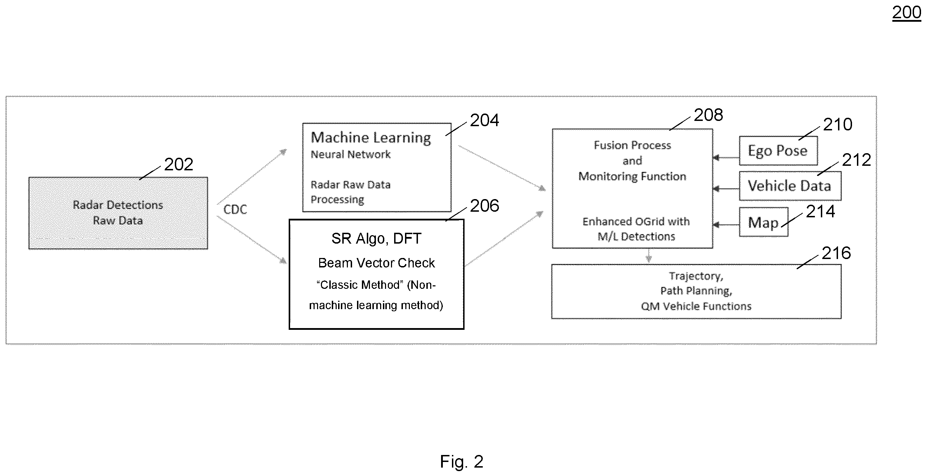

Fig. 2 shows a flow diagram 200 of data processing according to various embodiments. Radar detections raw data 202 may be provided to two processing branches. The radar detections raw data 202 may be provided as an input radar data stream. Receptions by an antenna array may be stacked and be added to the radar data stream. A data interface may be defined to transfer data from the range, range-rate maps from each antenna at selected range range-rate points. Especially locations, where the energy in an integrated energy map over all antennas is above CFAR and forms a local maximum, may be transferred, as this data may be used to form a detection in classical processing. However, more datapoints may be transferred to improve performance.

A first processing branch 204 may include a machine learning method (for example an artificial neural network). A second processing branch 206 may include a SR (short range) method or a DFT (discrete Fourier transform) method, and may include a beam vector check. The second processing branch may be referred to as "classic method", and may be free from (in other words: may not include) machine learning methods. The first processing branch 204 may provide first processed data to a fusion process and monitoring function 208. The second processing branch 206 may provide second processed data to the fusion process and monitoring function 208. The fusion process and monitoring function 208 may perform enhanced occupancy grid detections, for example including an ego pose 210, vehicle data 212, or a map 214 as further input, and may provide output data for controlling the vehicle to a module 216, which may for example determine a trajectory, carry out path planning, and/or quality management (QM) vehicle functions.

For both processing streams (in other words: branches), i.e. the first processing branch 204 and the second processing branch 206, the same radar data may be used. The classical stream (i.e. the second processing branch 206) may filter out noise factors and artefacts e. g. by CFAR (Constant False Alarm Rate) and the following ISM (Inverse Sensor Model) may dictate how the given measurements affect the occupancy states then. An integrated Bayesian filtering may determine how cell occupancy is updated over temporal samples. This virtual grid may be applied by the attached fusion process.

The first processing stream (i.e. the first processing branch 204) may receive the same radar data as the second processing branch 206, and may perform the raw data processing in a different manner. The first processing branch 204 may use machine learning method, for example a previously trained (artificial) neural network.

Machine learning method specialized to processing of radar raw data may find out much more detailed objects for perception and may additionally be able to perform a kind of object imaging in the farther environment of the ego vehicle.

The artificial neural network using in the first branch 204 may output its detections, which then may be imported to the fusion process building block 208.

The same radar data that is provided to the first branch 204 may also be provided to the second branch 206 and may be processed by a DFT method for angle finding and beam vector check based on received energy reflections and may perceive existing objects in the closer area.

The processing of the first branch 204 and of the second branch 206 may be carried out in parallel or sequentially.

According to various embodiments, computational requirements may be reduced by only detecting objects within the trajectory of ego vehicle; this may be used for comfort braking situations and/ or emergency braking situations.

To find the relevant occupancy grid area in front of vehicle to be scanned for dynamic and static objects, trajectory data of driving situation may be taken into account and perception data may be varied accordingly.

According to various embodiments, trajectory related radar detections may be recalculated.

Let A define the DFT matrix transforming antenna array information into an angle dependent energy spectrum such that

$$Fa = A * f\_a$$

Then the spectrum value at a specific angle k is given as $F(k)=A(k)*f\_a$. A method for recalculation would be the calculation of the spectral energy values at specific angles k where the k values match to the angular position of the planned path at a specific distance.

Then the spectrum value at a specific angle k is given as $F(a=k)=A(k)*f\_a$.

According to various embodiments, a main perception may take place by the use of machine learning and model based approach incorporated in a first area. This may be beneficial for smaller and hard to perceive objects, and may provide increased radar sensor performance not only for detecting but also for classifying and extracting detailed features like motion detection, poses and gestures. Accelerated machine learning methods may be provided by SoCs (systems on a chip) for artificial neural net computation (for example DSPs; digital signal processors).

According to various embodiments, safety critical (for example related to ASIL; Automotive Safety Integrity Level) perception may take place within a smaller area. This may provide a decreased computational effort on non-parallelized methods. Thus, safe and secure execution of safety relevant decisions, for example braking functions or lane change, may be provided.

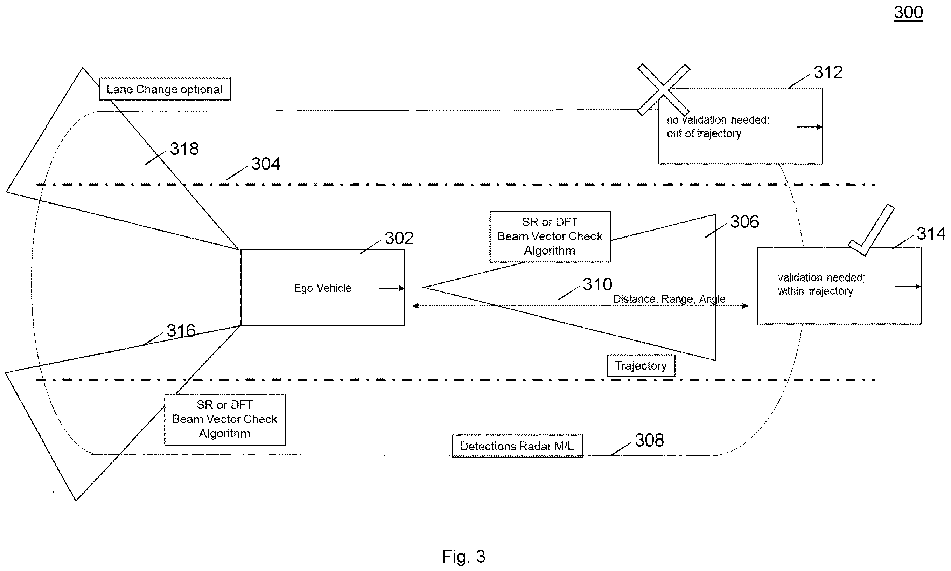

Fig. 3 shows an illustration 300 of a situation with a straight (in other words: linear) trajectory according to various embodiments. An ego vehicle 302 may be driving on a road 304. For example, another vehicle (not shown in Fig. 3) may be driving in front of the ego vehicle.

Radar detections using machine learning may be provided in a first area 308. Radar detections using classical methods may be provided in a smaller areas 306, 316, 318. Depending on the distance, range, and angle (like indicated by arrow 310), it may be decided whether detections by the machine learning method need to be verified by the classical methods. Detections which are along (or within) the target trajectory of the vehicle may be needed to be checked (for example a detection related to a possible object 314). Detections which are not along the target trajectory of the vehicle may not be needed to be checked (for example a detection related to a possible object 312). For example, in area 306 in front of the ego vehicle 302 (where another vehicle is driving), a classical method (for example SR or DFT) may be applied (for example to double check the results obtained by the machine learning method). Likewise, in area 316 at the right back area of the ego vehicle 302, the classical method may be applied. In area 318, which may be relevant if the ego vehicle 302 would consider a lane change, the classical method may be applied.

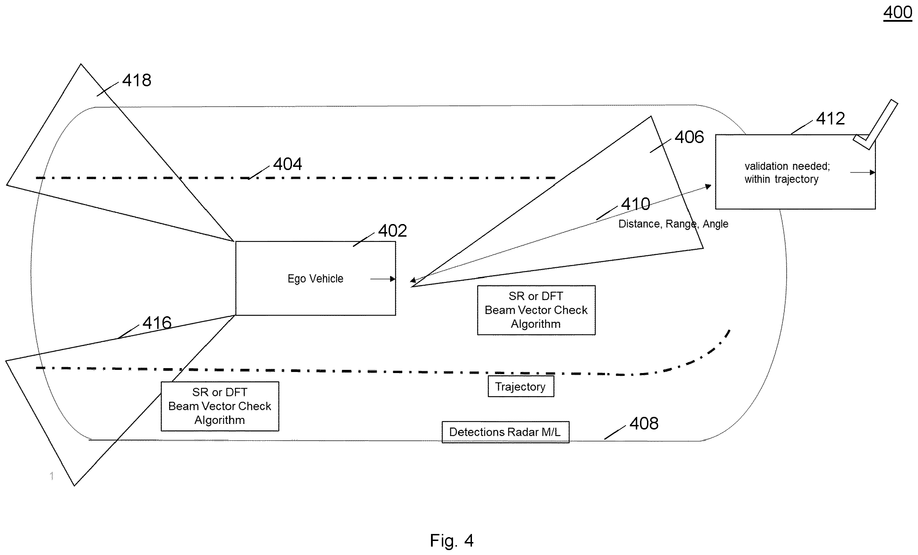

Fig. 4 shows an illustration 400 of a situation with a curved trajectory according to various embodiments. An ego vehicle 402 may be driving on a road 404. For example, another vehicle (not shown in Fig. 4) may be driving in front of the ego vehicle. Radar detections using machine learning may be provided in a first area 408. Radar detections using classical methods may be provided in a smaller area 406. Depending on the distance range, and angle (like indicated by arrow 410), it may be decided whether detections by the machine learning method need to be verified by the classical methods. Detections which are along (or within) the target trajectory of the vehicle may be needed to be checked (for example a detection related to a possible object 412). Detections which are not along the target trajectory of the vehicle may not be needed to be checked. For example, in area 406 in front of the ego vehicle 402 (where another vehicle is driving), a classical method (for example SR or DFT) may be applied (for example to double check the results obtained by the machine learning method). Likewise, in area 416 at the right back area of the ego vehicle 402, the classical method may be applied. In area 418, which may be relevant if the ego vehicle 402 would consider a lane change, the classical method may be applied.

Classical FFT (Fast Fourier Transform) methods may be executed on ASIL-B performance SoC for the trajectory specific area and may compare the M/L (machine learning) based detections. The Path-planning and braking decisions may always be directed by the FFT methods to delete false positive and false negative detections, for example like illustrated in the following.

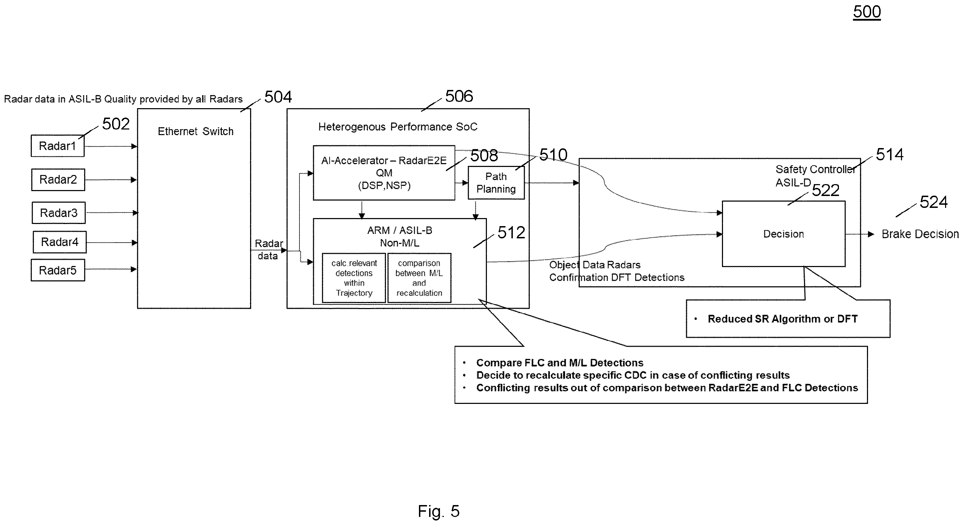

Fig. 5 shows an illustration of data flow on ECU (electronic control unit) system level according to various embodiments. Various radar sensors 502 may provide data to an ethernet switch 504, which may output data to a heterogenous performance SoC 506, which may include an AI (artificial intelligence) accelerator 508 and a ASIL-B scalar processing unit 512 (which may compare FLC (forward looking camera) and machine learning detections, may decide to recalculate specific radar data in case of conflicting results, and may determine conflicting results out of comparison between machine learning methods and classical methods.

The machine learning method 508 may provide data to a path planning block 510, which may provide its output data to a safety controller 514.

The ASIL-B scalar processing unit 512 may output object data radars to the ASIL-D safety controller 514, which, in a decision block 522 may fuse machine learning detections and detections from a classical method. The decision block 522 may determine a brake decision 524.

As illustrated in Fig. 5, ASIL decomposition may be provided: Machine learning in QM (block 508), and non-M/L approach (in other words: classical approach) in ASIL B or higher (block 512).

The machine learning method of block 508 may find more objects with higher detail level, may provide object imaging, and may determine stationary and dynamic objects.

The classical approach of block 512 may provide 2nd FFT angle finding, may provide a SR (superresolution) method, may determine less objects and may provide less range, but may be validated and safe.

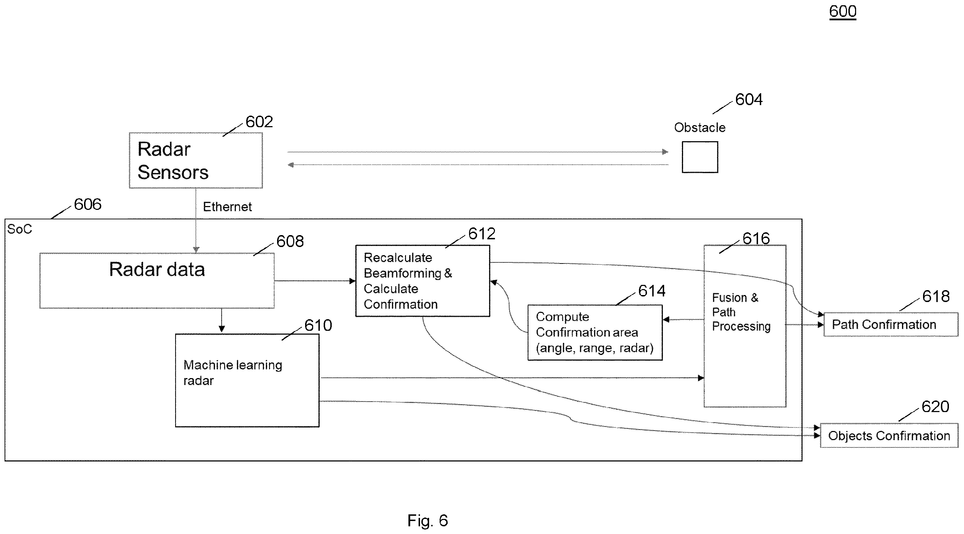

Fig. 6 shows a diagram 600 illustrating a method flow with confirmation logic according to various embodiments. A radar sensor 602 may sense an obstacle 604, and may provide radar data 608 to a SoC 606. The radar data 608 may be provided to a machine learning method 610 and to a classical method 612 (for example a superresolution method). The classical method 612 may include a DFT (discrete Fourier transform). The classical method 612 may recalculate beamforming and may calculate a confirmation.

Given that a system, e.g. the M/L system 610, has detected a certain target in a certain distance and in a certain speed range, the energy in this area may be calculated for specific beam vectors using classical superresolution methods 612, or a DFT. An efficient solution may be the calculation of energy within certain angular bins.

For example, a DFT may be formulated as complex matrix multiplication s=A*x where a specific bin s($\alpha$) allows to derive energy for a specific angle $\alpha$, e.g. by simplifying the equation to s($\alpha$)=A($\alpha$)x where A($\alpha$) represents a specific line in matrix A.

Given that a target represents reflections in certain range angle bins in a defined speed range, it may be looked for maxima within a range around the target with a specific energy to crosscheck for physical evidence for a target at that range.

On the opposite, a path may also be checked where each x,y cell represents a certain range angle area in a radar data cube by summing over the energy for a specific angle over all doppler bins in the specific range bin to look for evidence of a target in the cell or close to the cell. Any indication of energy belonging to a target in a specific beamvector may be crosschecked with an SR (short range) method on that specific beamvector to save calculation time.

For example, in block 614, a check for trajectory-relevant angle bins for energy maxima may be carried out, and a crosscheck for physical evidence of the obstacle may be carried out. In block 614, a confirmation area (for example related to angle, range, radar) may be determined.

The output of the machine learning method 610 and the result of cross check 614 may be provided as compiled object data 616 (for example based on fusion and path processing), and may be provided to a safety MCU (microcontroller unit), for example as a path confirmation 618. Objects confirmation 620 may be determined based on blacks 610 and 612.

Block 610 may be based on a machine learning method. Blocks 612 may 614 may be based on a conventional method (in other words: classical method), and may be free from machine learning methods.

According to various embodiments, the trajectory check may include a threat area which is based on nearby spatial area. TTC (time to collision) may be determined based on ego and object trajectories, headway in forward ego path, and possible other threat reachable states based on reasonable physical limits.

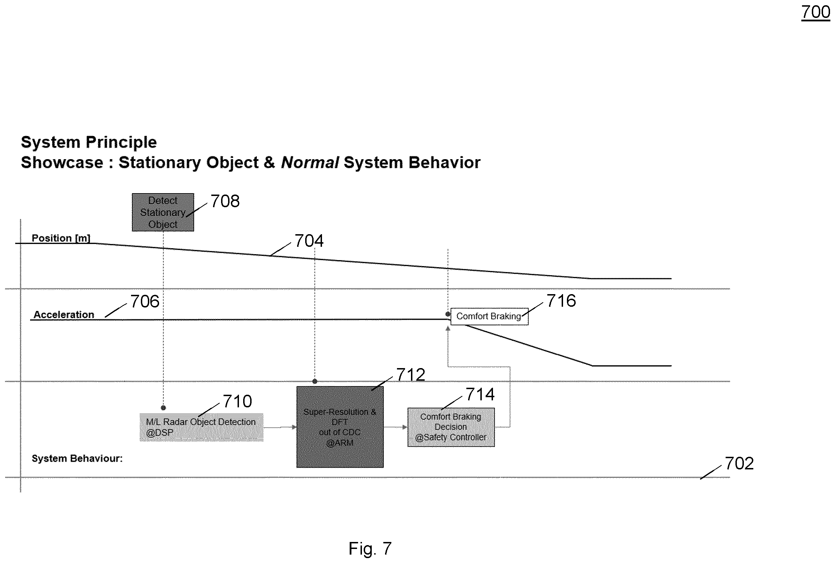

Fig. 7 shows an illustration 700 of normal system behavior according to various embodiments. A position 704 of a vehicle and an acceleration 706 of the vehicle are illustrated over time 702. A static object 708 may be detected by the machine learning method 710. A classical method 712 may double check and confirm the detection of the machine learning method 710, and may take a comfort braking decision 714, so that comfort braking 716 may be initiated for the vehicle.

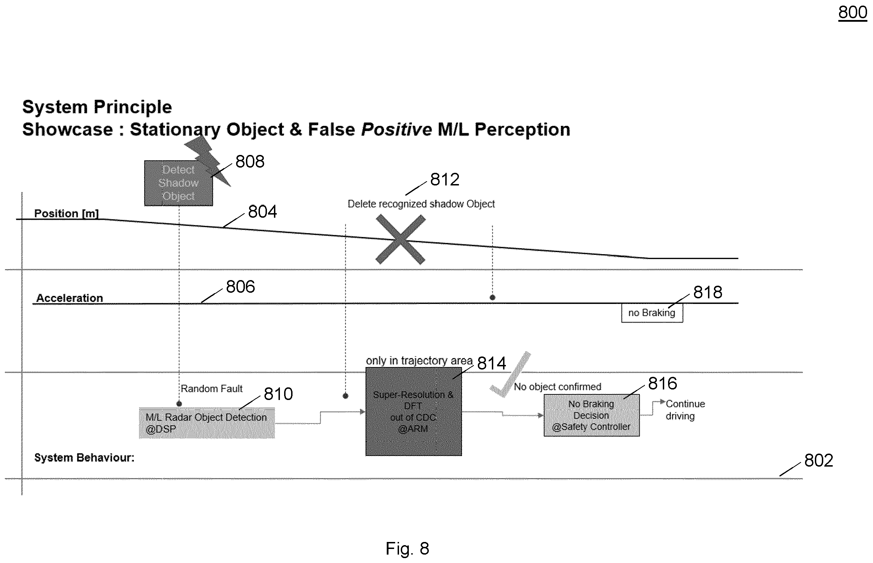

Fig. 8 shows an illustration 800 of false positive perception according to various embodiments. A position 804 of a vehicle and an acceleration 806 of the vehicle are illustrated over time 802. A shadow object 808 (in other words: an object which actually is non-existent) may be detected by the machine learning method 810. A classical method 814 may double check the detection of the machine learning method 810, and may thus delete the recognized shadow object as illustrated in 812 (in other words: the shadow object may be disregarded). Thus, no braking decision may be taken, as illustrated in 816, so that no braking is initiated for the vehicle, like illustrated in 818.

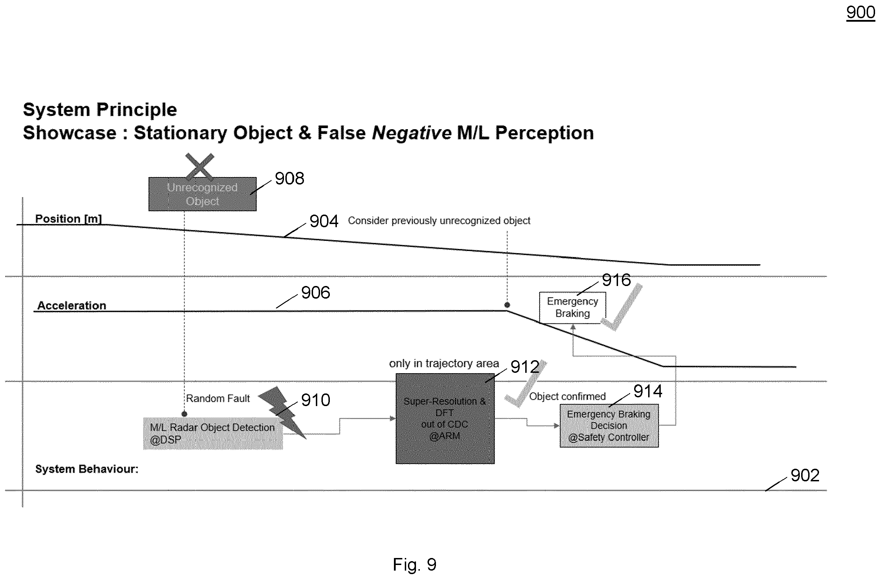

Fig. 9 shows an illustration 900 of false negative perception according to various embodiments. A position 904 of a vehicle and an acceleration 906 of the vehicle are illustrated over time 902. An object 908 may stay undetected by a machine learning method 910. A classical method 912 may double check an area along a trajectory of the vehicle, and my identify the previously unrecognized object 908. Thus, an emergency braking decision 914 may be taken, and emergency braking 916 may be initiated for the vehicle.

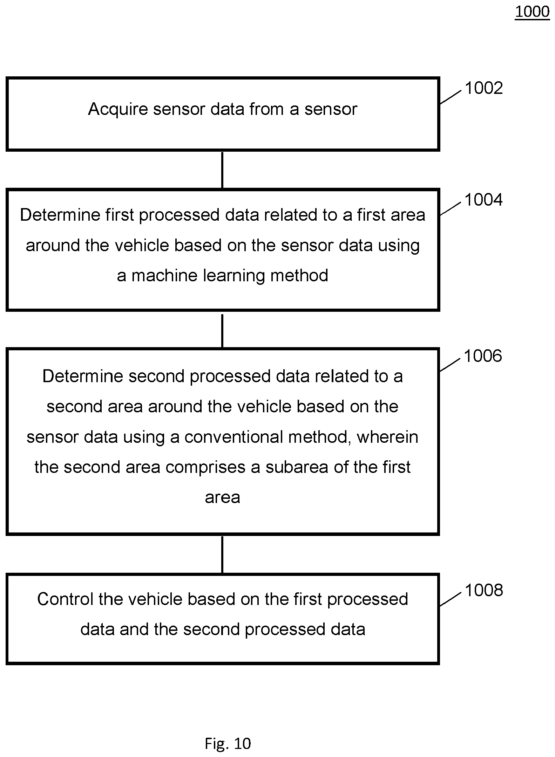

Fig. 10 shows a flow diagram 1000 illustrating a method for controlling a vehicle according to various embodiments. At 1002, sensor data may be acquired from a sensor. At 1004, first processed data related to a first area around the vehicle may be determined based on the sensor data using a machine learning method. At 1006, second processed data related to a second area around the vehicle may be determined based on the sensor data using a conventional method, wherein the second area includes (for example: is) a subarea of the first area. At 1008, the vehicle may be controlled based on the first processed data and the second processed data.

According to various embodiments, the conventional method may perform double checking of the first processed data.

According to various embodiments, the conventional method may perform double checking of the first processed data along a target trajectory of the vehicle.

According to various embodiments, double checking may include or may be determining an energy in radar data related to a position of an object determined based on the first processed data.

According to various embodiments, the first processed data and the second processed data may be determined in parallel.

According to various embodiments, controlling the vehicle may include or may be controlling braking of the vehicle.

According to various embodiments, if an object detected based on first processed data is confirmed based on second processed data, controlling the vehicle may include or may be comfort braking of the vehicle.

According to various embodiments, if an object detected based on first processed data is not confirmed based on second processed data, controlling the vehicle may include or may be not initiating braking of the vehicle.

According to various embodiments, if an object undetected based on first processed data is detected based on second processed data, controlling the vehicle may include or may be emergency braking of the vehicle.

According to various embodiments, the first area and/or the second area may be determined based on a velocity of the vehicle.

According to various embodiments, the first area and/or the second area may be determined based on a steering angle of the vehicle.

According to various embodiments, the sensor may include or may be one or more radar sensors and/or one or more lidar sensors and/or one or more infrared sensors and/or one or more cameras.

Each of the steps 1002, 1004, 1006, 1008 and the further steps described above may be performed by computer hardware components.

With the methods and systems as described herein, unintended braking on system limit may be prevented (for example by identifying or avoiding false positives). Objects from outer area may be crosschecked with the objects of the inner area. If an object is not confirmed at the transition from outer to inner area, no AEB (autonomous emergency braking) will be triggered.

With the methods and systems as described herein, insufficient braking may be prevented (for example by identifying or avoiding false negatives). Objects from outer area may be crosschecked with the objects of the inner area. If an object appears in inner area that is not known from outer area, AEB will be triggered anyhow.

With the methods and systems as described herein, path planning and trajectory generation may be based on the ML objects and such on the best possible environmental model.

With the methods and systems as described herein, path planning and trajectory generation may be done in a deterministic, ASIL certified method. As long as the input to this method is correct, it can be assumed that the output is correct.

Failures in the input may be detected and covered with the measures described herein.

As described herein, radar perception may be using CFAR method for filtering incoming reflections to avoid artefacts and an inverse sensor model may be used for post-processing to calculate qualitative information of environment. Radar detections may be suffering of noise factors, so that input stream may be filtered to be processed (however, this filtering may erase important information which could be valuable for detailed detections). Thus, according to various embodiments, a combination of techniques may be provided to allow machine learning based perception. Various embodiments may deliver better characteristics and superiority over classical radar processing. According to various embodiments, a combination between a classical method and an artificial neural network may lead to lower systematic failure with ASIL-B Quality. According to various embodiments, no high validation and testing effort for M/L based method may be required, and safety related parts may still be realized with known and existing methods on an ASIL-B processor.

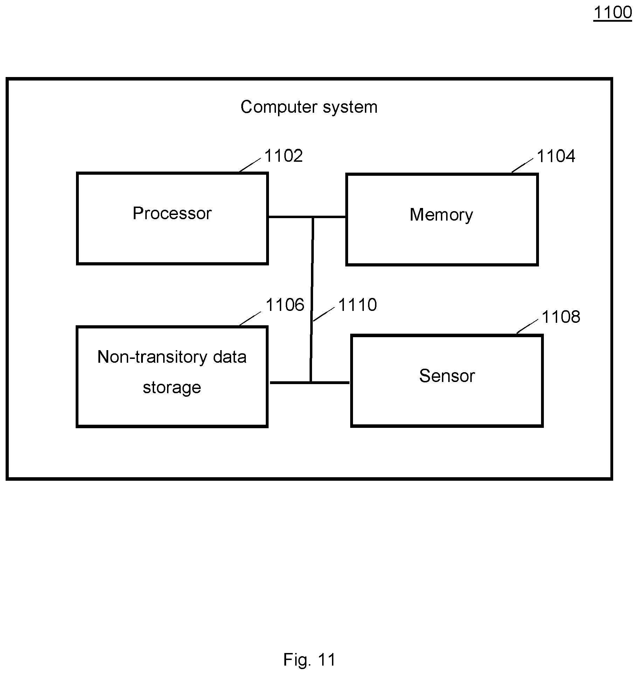

Fig. 11 shows a computer system 1100 with a plurality of computer hardware components configured to carry out steps of a computer implemented method for controlling a vehicle according to various embodiments. The computer system 1100 may include a processor 1102, a memory 1104, and a non-transitory data storage 1106. A sensor 1108 may be provided as part of the computer system 1100 (like illustrated in Fig. 11), or may be provided external to the computer system 1100.

The processor 1102 may carry out instructions provided in the memory 1104. The non-transitory data storage 1106 may store a computer program, including the instructions that may be transferred to the memory 1104 and then executed by the processor 1102. The sensor 1108 may be used to acquire the sensor data as described herein.

The processor 1102, the memory 1104, and the non-transitory data storage 1106 may be coupled with each other, e.g. via an electrical connection 1110, such as e.g. a cable or a computer bus or via any other suitable electrical connection to exchange electrical signals. The sensor 1108 may be coupled to the computer system 1100, for example via an external interface, or may be provided as parts of the computer system (in other words: internal to the computer system, for example coupled via the electrical connection 1110).

The terms "coupling" or "connection" are intended to include a direct "coupling" (for example via a physical link) or direct "connection" as well as an indirect "coupling" or indirect "connection" (for example via a logical link), respectively.

It will be understood that what has been described for one of the methods above may analogously hold true for the computer system 1100.

Reference numeral list

| 100 | illustration of process flow to occupancy grid |
| 102 | Inverse Sensor Model |
| 104 | occupancy grid |
| 200 | flow diagram of data processing according to various embodiments |
| 202 | radar detections raw data |
| 204 | first processing branch |
| 206 | second processing branch |
| 208 | fusion process and monitoring function |
| 210 | ego pose |
| 212 | vehicle data |
| 214 | map |
| 216 | module |
| 300 | illustration of a situation with a straight trajectory according to various embodiments |
| 302 | ego vehicle |
| 304 | road |
| 306 | smaller area |
| 308 | first area |
| 310 | arrow |
| 312 | possible object |
| 314 | possible object |
| 316 | smaller area |
| 318 | smaller area |
| 400 | illustration of a situation with a curved trajectory according to various embodiments |
| 402 | ego vehicle |
| 404 | road |
| 406 | smaller area |
| 408 | first area |
| 410 | arrow |
| 412 | possible object |

| 416 | area |
| 418 | area |
| 500 | illustration of data flow on ECU system level according to various embodiments |
| 502 | radar sensors |
| 504 | ethernet switch |
| 506 | heterogenous performance SoC |
| 508 | artificial intelligence accelerator |
| 510 | path planning block |
| 512 | ASIL-B scalar processing unit |
| 514 | safety controller |
| 522 | decision block |
| 524 | brake decision |
| 600 | diagram illustrating a method flow with confirmation logic according to various embodiments |
| 602 | radar sensor |
| 604 | obstacle |
| 606 | SoC |
| 608 | radar data |
| 610 | machine learning method |
| 612 | classical method |
| 614 | block |
| 616 | compiled object data |
| 618 | path confirmation |
| 620 | objects confirmation |
| 700 | illustration of normal system behavior according to various embodiments |
| 702 | time |
| 704 | position |
| 706 | acceleration |
| 708 | static object |
| 710 | machine learning method |
| 712 | classical method |
| 714 | comfort braking decision |
| 716 | comfort braking |
| 800 | illustration of false positive perception according to various embodiments |
| 802 | time |
| 804 | position |
| 806 | acceleration |
| 808 | shadow object |
| 810 | machine learning method |
| 812 | shadow object is disregarded |
| 814 | classical method |
| 816 | no braking decision is taken |
| 818 | no braking is initiated |
| 900 | illustration of false negative perception according to various embodiments |
| 902 | time |
| 904 | position |
| 906 | acceleration |
| 908 | object |
| 910 | machine learning method |

912 classical method
914 emergency braking decision
916 emergency braking

1000 flow diagram illustrating a method for controlling a vehicle according to various embodiments
1002 step of acquiring sensor data from a sensor
1004 step of determining first processed data related to a first area around the vehicle based on the sensor data using a machine learning method
1006 step of determining second processed data related to a second area around the vehicle based on the sensor data using a conventional method
1008 step of controlling the vehicle based on the first processed data and the second processed data

1100 computer system according to various embodiments
1102 processor
1104 memory
1106 non-transitory data storage
1108 sensor
1110 connection

**Claims**

1. Computer implemented method for controlling a vehicle,
the method comprising the following steps carried out by computer hardware components:

   - acquiring (1002) sensor data from a sensor;
   - determining (1004) first processed data related to a first area around the vehicle based on the sensor data using a machine learning method;
   - determining (1006) second processed data related to a second area around the vehicle based on the sensor data using a conventional method, wherein the second area comprises a subarea of the first area; and
   - controlling (1008) the vehicle based on the first processed data and the second processed data.

2. The computer implemented method of claim 1, wherein the conventional method double checks the first processed data.

3. The computer implemented method of claim 2, wherein the conventional method double checks the first processed data along a target trajectory of the vehicle.

4. The computer implemented method of at least one of claims 2 or 3,
wherein double checking comprises determining an energy in radar data related to a position of an object determined based on the first processed data.

5. The computer implemented method of at least one of claims 1 to 4,
wherein the first processed data and the second processed data are determined in parallel.

6. The computer implemented method of at least one of claims 1 to 5,
wherein controlling the vehicle comprises controlling braking of the vehicle.

7. The computer implemented method of at least one of claims 1 to 6,
wherein if an object detected based on first processed data is confirmed based on second processed data, controlling the vehicle comprises comfort braking of the vehicle.

8. The computer implemented method of at least one of claims 1 to 7,
wherein if an object detected based on first processed data is not confirmed based on second processed data, controlling the vehicle comprises not initiating braking of the vehicle.

9. The computer implemented method of at least one of claims 1 to 8,
wherein if an object undetected based on first processed data is detected based on second processed data, controlling the vehicle comprises emergency braking of the vehicle.

10. The computer implemented method of at least one of claims 1 to 9,
wherein the first area and/or the second area are/is determined based on a velocity of the vehicle.

11. The computer implemented method of at least one of claims 1 to 10,
wherein the first area and/or the second area are/is determined based on a steering angle of the vehicle.

12. The computer implemented method of at least one of claims 1 to 11,
wherein the sensor comprises at least one of a radar sensor, a lidar sensor, an infrared sensor, or a camera.

13. Computer system (1100), the computer system (1100) comprising a plurality of computer hardware components configured to carry out the steps of the computer implemented method of at least one of claims 1 to 12.

14. Vehicle, comprising the computer system (1100) of claim 13 and the sensor (1108).

15. Non-transitory computer readable medium comprising instructions for carrying out the computer implemented method of at least one of claims 1 to 12.

**Patentansprüche**

1.  Von einem Computer realisiertes Verfahren zur Steuerung eines Fahrzeugs, wobei das Verfahren die folgenden durch Computerhardwarekomponenten ausgeführten Schritte umfasst:

    - Erlangen (1002) von Sensordaten von einem Sensor;
    - Ermitteln (1004) von ersten verarbeiteten Daten, die sich auf einen ersten Bereich um das Fahrzeug herum beziehen, basierend auf den Sensordaten unter Verwendung eines Verfahrens eines maschinellen Lernens;
    - Ermitteln (1006) von zweiten verarbeiteten Daten, die sich auf einen zweiten Bereich um das Fahrzeug herum beziehen, basierend auf den Sensordaten unter Verwendung eines herkömmlichen Verfahrens, wobei der zweite Bereich einen Unterbereich des ersten Bereichs umfasst; und
    - Steuern (1008) des Fahrzeugs basierend auf den ersten verarbeiteten Daten und den zweiten verarbeiteten Daten.

2.  Von einem Computer realisiertes Verfahren nach Anspruch 1, wobei das herkömmliche Verfahren die ersten verarbeiteten Daten nachprüft.

3.  Von einem Computer realisiertes Verfahren nach Anspruch 2, wobei das herkömmliche Verfahren die ersten verarbeiteten Daten entlang einer Zieltrajektorie des Fahrzeugs nachprüft.

4.  Von einem Computer realisiertes Verfahren nach zumindest einem der Ansprüche 2 oder 3, wobei das Nachprüfen umfasst, dass eine Energie in Radardaten ermittelt wird, die sich auf eine Position eines Objekts beziehen, das basierend auf den ersten verarbeiteten Daten ermittelt wird.

5.  Von einem Computer realisiertes Verfahren nach zumindest einem der Ansprüche 1 bis 4, wobei die ersten verarbeiteten Daten und die zweiten verarbeiteten Daten parallel ermittelt werden.

6.  Von einem Computer realisiertes Verfahren nach zumindest einem der Ansprüche 1 bis 5, wobei das Steuern des Fahrzeugs ein Steuern der Bremsung des Fahrzeugs umfasst.

7.  Von einem Computer realisiertes Verfahren nach zumindest einem der Ansprüche 1 bis 6, wobei, wenn ein basierend auf ersten verarbeiteten Daten detektiertes Objekt basierend auf zweiten verarbeiteten Daten bestätigt wird, das Steuern des Fahrzeugs ein Komfortbremsen des Fahrzeugs umfasst.

8.  Von einem Computer realisiertes Verfahren nach zumindest einem der Ansprüche 1 bis 7, wobei, wenn ein basierend auf ersten verarbeiteten Daten detektiertes Objekt nicht basierend auf zweiten verarbeiteten Daten bestätigt wird, das Steuern des Fahrzeugs umfasst, dass kein Bremsen des Fahrzeugs initiiert wird.

9.  Von einem Computer realisiertes Verfahren nach zumindest einem der Ansprüche 1 bis 8, wobei, wenn ein basierend auf ersten verarbeiteten Daten nicht detektiertes Objekt basierend auf zweiten verarbeiteten Daten detektiert wird, das Steuern des Fahrzeugs eine Notbremsung des Fahrzeugs umfasst.

10. Von einem Computer realisiertes Verfahren nach zumindest einem der Ansprüche 1 bis 9, wobei der erste Bereich und/oder der zweite Bereich basierend auf einer Geschwindigkeit des Fahrzeugs ermittelt wird/werden.

11. Von einem Computer realisiertes Verfahren nach zumindest einem der Ansprüche 1 bis 10, wobei der erste Bereich und/oder der zweite Bereich basierend auf einem Lenkwinkel des Fahrzeugs ermittelt wird/werden.

12. Von einem Computer realisiertes Verfahren nach zumindest einem der Ansprüche 1 bis 11, wobei der Sensor einen Radarsensor und/oder einen LiDAR-Sensor und/ oder einen Infrarotsensor und/oder eine Kamera umfasst.

13. Computersystem (1100), wobei das Computersystem (1100) eine Vielzahl von Computerhardwarekomponenten umfasst, die ausgestaltet sind, um die Schritte des von einem Computer realisierten Verfahrens nach zumindest einem der Ansprüche 1 bis 12 auszuführen.

14. Fahrzeug, umfassend das Computersystem (1100) nach Anspruch 13 und den Sensor (1108).

15. Nicht-transitorisches von einem Computer lesbares Medium, umfassend Anweisungen zur Ausführung des von einem Computer realisierten Verfahrens nach zumindest einem der Ansprüche 1 bis 12.

**Revendications**

1. Procédé mis en oeuvre par ordinateur pour commander un véhicule, le procédé comprenant les étapes suivantes exécutées par des composants matériels de l'ordinateur, consistant à :

   - acquérir (1002) des données de capteur à partir d'un capteur ;
   - déterminer (1004) des premières données traitées relatives à une première zone autour du véhicule sur la base des données de capteur à l'aide d'une méthode d'apprentissage automatique ;
   - déterminer (1006) des secondes données traitées relatives à une seconde zone autour du véhicule sur la base des données de capteur à l'aide d'une méthode conventionnelle, dans lequel la seconde zone comprend une sous-zone de la première zone ; et
   - commander (1008) le véhicule sur la base des premières données traitées et des secondes données traitées.

2. Procédé mis en oeuvre par ordinateur selon la revendication 1,
   dans lequel la méthode conventionnelle effectue une double vérification des premières données traitées.

3. Procédé mis en oeuvre par ordinateur selon la revendication 2,
   dans lequel la méthode conventionnelle effectue une double vérification des premières données traitées le long d'une trajectoire cible du véhicule.

4. Procédé mis en oeuvre par ordinateur selon au moins l'une des revendications 2 ou 3,
   dans lequel la double vérification consiste à déterminer une énergie dans les données radar relatives à la position d'un objet déterminée sur la base des premières données traitées.

5. Procédé mis en oeuvre par ordinateur selon au moins l'une des revendications 1 à 4,
   dans lequel les premières données traitées et les secondes données traitées sont déterminées en parallèle.

6. Procédé mis en oeuvre par ordinateur selon au moins l'une des revendications 1 à 5,
   dans lequel commander le véhicule consiste à commander le freinage du véhicule.

7. Procédé mis en oeuvre par ordinateur selon au moins l'une des revendications 1 à 6,
   dans lequel, si un objet détecté sur la base des premières données traitées est confirmé sur la base des secondes données traitées, commander le véhicule à effectuer un freinage de confort du véhicule.

8. Procédé mis en oeuvre par ordinateur selon au moins l'une des revendications 1 à 7,
   dans lequel si un objet détecté sur la base des premières données traitées n'est pas confirmé sur la base des secondes données traitées, commander le véhicule consiste à ne pas déclencher le freinage du véhicule.

9. Procédé mis en oeuvre par ordinateur selon au moins l'une des revendications 1 à 8,
   dans lequel si un objet non détecté sur la base des premières données traitées est détecté sur la base des secondes données traitées, commander le véhicule consiste à effectuer un freinage d'urgence du véhicule.

10. Procédé mis en oeuvre par ordinateur selon au moins l'une des revendications 1 à 9,
    dans lequel la première zone et/ou la seconde zone sont déterminées sur la base de la vitesse du véhicule.

11. Procédé mis en oeuvre par ordinateur selon au moins l'une des revendications 1 à 10,
    dans lequel la première zone et/ou la seconde zone sont déterminées sur la base d'un angle de braquage du véhicule.

12. Procédé mis en oeuvre par ordinateur selon au moins l'une des revendications 1 à 11,
    dans lequel le capteur comprend un capteur radar, un capteur lidar, un capteur infrarouge et/ou une caméra.

13. Système informatique (1100), le système informatique (1100) comprenant une pluralité de composants matériels d'ordinateur configurés pour exécuter les étapes du procédé mis en oeuvre par ordinateur selon au moins l'une des revendications 1 à 12.

14. Véhicule comprenant le système informatique (1100) selon la revendication 13 et le capteur (1108).

15. Support non transitoire lisible par ordinateur comprenant des instructions pour exécuter le procédé mis en oeuvre par ordinateur selon au moins l'une des revendications 1 à 12.

100

$\Omega = \{F,O\}$ f: free, o:occupied

ISM (Radar) — 102

Gaussian Filter or
Bayesian Filter

OG — 104

Fig. 1

Fig. 2

Fig. 3

EP 4 140 842 B1

Fig. 4

EP 4 140 842 B1

Fig. 5

Fig. 6

**System Principle**
**Showcase : Stationary Object &** *Normal* **System Behavior**

Fig. 7

**System Principle**

**Showcase : Stationary Object & False *Positive* M/L Perception**

Fig. 8

EP 4 140 842 B1

EP 4 140 842 B1

**System Principle**
**Showcase : Stationary Object & False *Negative* M/L Perception**

Position [m]     904   Consider previously unrecognized object

Unrecognized Object   908

916   Emergency Braking

Acceleration   906

only in trajectory area   912

Object confirmed   914

Random Fault   910

Super-Resolution & DFT out of CDC @ARM

M/L Radar Object Detection @DSP

Emergency Braking Decision @Safety Controller

System Behaviour:   902

Fig. 9

EP 4 140 842 B1

1000

Acquire sensor data from a sensor — 1002

Determine first processed data related to a first area around the vehicle based on the sensor data using a machine learning method — 1004

Determine second processed data related to a second area around the vehicle based on the sensor data using a conventional method, wherein the second area comprises a subarea of the first area — 1006

Control the vehicle based on the first processed data and the second processed data — 1008

Fig. 10

21

1100

Fig. 11

**EP 4 140 842 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2019243371 A1